# EUROPÄISCHE PATENTSCHRIFT

(11) **EP 1 074 377 B1**
(45) Veröffentlichungstag und Bekanntmachung des Hinweises auf die Patenterteilung: **03.09.2003**
(21) Anmeldenummer: 00115297.4
(22) Anmeldetag: 14.07.2000
(51) Int. Cl.: B29C 51/44, B29C 51/42

(54) **Verfahren zum Kühlen von Behältern aus thermoplastischem Kunststoff und Stapeleinrichtung zur Durchführung des Verfahrens**
Method of cooling containers made of thermoplastic material and stacking device for carrying out the method
Procédé pour refroidir des récipients en matière thermoplastique et dispositif d'empilage pour la mise en oeuvre de ce procédé

(30) Priorität: 06.08.1999 DE 19937288
(43) Veröffentlichungstag der Anmeldung: 07.02.2001
(73) Patentinhaber: Adolf Illig Maschinenbau GmbH & Co. KG, 74081 Heilbronn (DE)
(72) Erfinder: Karbach, Helmut, 74172 Neckarsulm (DE)

(56) Entgegenhaltungen:
- CH-A- 625 742
- DE-A- 2 517 981
- DE-A- 3 601 937
- DE-A- 19 509 057
- DE-U- 29 608 477
- US-A- 4 622 800

## Beschreibung

Die Erfindung betrifft ein Verfahren zum Kühlen von Behältern aus thermoplastischem Kunststoff, die in einem Formwerkzeug geformt, ausgestanzt und zu Stapelmagazinen geführt werden, nach der Gattung des Hauptanspruches, sowie eine Stapeleinrichtung zur Durchführung des Verfahrens.

Es ist bekannt, aus einer thermoplastischen Kunststofffolie geformte und ausgestanzte Behälter in Stapelmagazinen zu stapeln und die Stapel bei einer bestimmten Länge oder bei einer bestimmten Stückzahl aus den Stapelmagazinen zu entfernen und Nachfolgeeinrichtungen zuzuführen. In diesen Nachfolgeeinrichtungen wird entweder eine Bearbeitung vorgenommen, es wird z. B. der Behälterrand gebördelt, oder die Stangen werden in Folie verpackt und dann in Kartons übergeben.

Aus der DE 34 39 660 C 2 (Figur 4) ist es bekannt, die aus dem Formwerkzeug ausgestoßenen Behälter mittels einer Saugplatte zu ergreifen und direkt in Stapelmagazine zu übergeben, wobei diese aus Stangen bestehen, die am Umfang der Kontur der Behälter angeordnet sind. Eine Kühlung der Behälter ist nicht vorgesehen. Durch die offene Bauweise der Stapelmagazine tritt eine relativ große Verkeimung der Behälteroberfläche ein, die bei Verwendung der Behälter zur Lebensmittelverpackung nachteilig ist. Stapelmagazine dieser Bauart sind sehr teuer, weil bei mehrreihiger Formung von Behältern viele Stapelmagazine und damit viele Bauteile erforderlich sind, die präzise montiert und mit Rückhalteorganen versehen werden müssen.

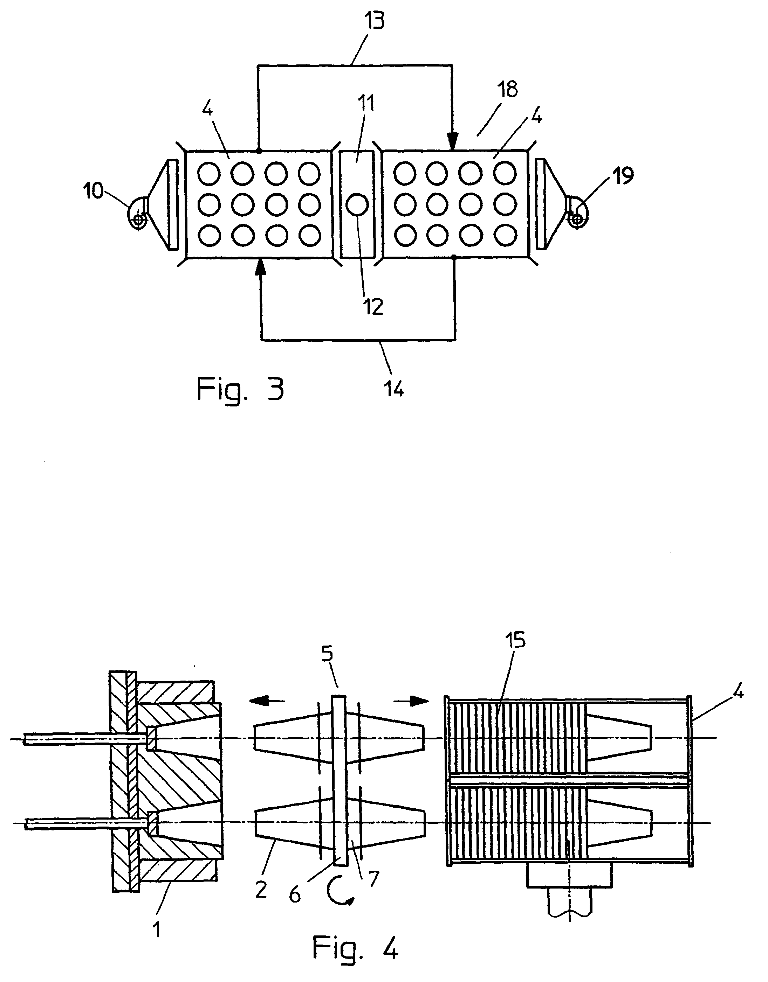

Figur 3 derselben Veröffentlichung zeigt das Übergeben der Behälter auf ein Transportband, auf dem die Behälter abkühlen können, was aber ebenfalls eine Verkeimung fördert und eine zusätzliche Einrichtung benötigt, die die Behälter wieder ergreift und in Stapelmagazine überführt. Dieses Verfahren ist zudem störungsanfällig.

In der DE 92 19 137 U1 wird vorgeschlagen, die aus dem Formwerkzeug ausgestanzten Behälter in umlaufende Paletten zu setzen, dort abkühlen zu lassen und dann in Stapelmagazine, die von Stangen gebildet werden, zu stapeln. Auch dieses Verfahren ist verkeimungsanfällig und erfordert zwei Übergabeeinrichtungen und viele Bauteile der Stapelmagazine, um Stapel von Behältern zu erhalten.

Aus dem deutschen Gebrauchsmuster G 82 17 130 ist es bekannt, ein Stapelmagazin aus einem ringsum geschlossenen Bauteil zu bilden. Wenn man viele solcher Bauteile aneinander setzt, was bei mehrreihiger Fertigung von Behältern erforderlich ist, und noch warme Behälter in diese Stapelmagazine einstapelt, ist dies zwar von der Verkeimung her sehr günstig, doch heizen sich die Wandungen der Stapelmagazine auf und eine Abkühlung der Behälter ist behindert. Dies kann zu einer Deformation der Behälter durch die Stapelung nachfolgender Behälter bzw. beim Herausführen von Stapeln bestimmter Länge aus den Stapelmagazinen führen.

Der Erfindung liegt die Aufgabe zugrunde, das Verfahren so durchzuführen, dass relativ warme Behälter aus dem Formwerkzeug entnommen und unanfällig gegen Verkeimung sowie ohne Gefahr der Deformation gestapelt werden können, wobei eine gezielte weitere Abkühlung der gestapelten Behälter erfolgen sollte. Es sollte eine hohe Taktzahl des Formwerkzeuges ermöglichen, indem es das Stapeln von noch relativ warmen Behältern zulässt. Das Verfahren sollte eine im Aufbau einfache und störungsunanfällige Stapeleinrichtung erfordern.

Zur Lösung der Aufgabe werden die Merkmale des Hauptanspruches vorgeschlagen. Die Stapeleinrichtung ist gekennzeichnet durch Merkmale des Anspruches 10.

Das Verfahren ist anhand der schematischen Zeichnungen verschiedener Ausführungsbeispiele der Stapeleinrichtung näher beschrieben. Es zeigen:
- Figur 1: eine Vorderansicht und
- Figur 2: eine Draufsicht auf eine erste Ausführungsform der Stapeleinrichtung
- Figur 3: eine Ansicht in Richtung X der Figur 2
- Figur 4: eine Vorderansicht einer zweiten Ausführungsform der Stapeleinrichtung
- Figur 5 und 6: eine vergrößerte Darstellung eines über ein Kühlmedium gekühlten Stapelmagazins im Längsschnitt und in der Draufsicht.
- Figur 7: eine Draufsicht auf eine Variante eines Stapelmagazin - Transportes.

Die Stapeleinrichtung zur Durchführung des Verfahrens wird einer Thermoformmaschine nachgeschaltet, die mittels eines Formwerkzeuges 1 Behälter 2 aus einer erwärmten thermoplastischen Kunststofffolie 3 formt und ausstanzt. In den dargestellten Beispielen ist die eine Hälfte des Formwerkzeuges 1 schwenkbar bis zu einer horizontalen Lage ausgebildet, die Behälter 2 werden horizontal aus dem Formwerkzeug 1 in bekannter Weise ausgestoßen. Andere Ausgaberichtungen sind für das erfindungsgemäße Verfahren ebenfalls möglich, z.B. durch Schwenken des Formwerkzeuges 1 nur um 75° aus der Vertikalen heraus.

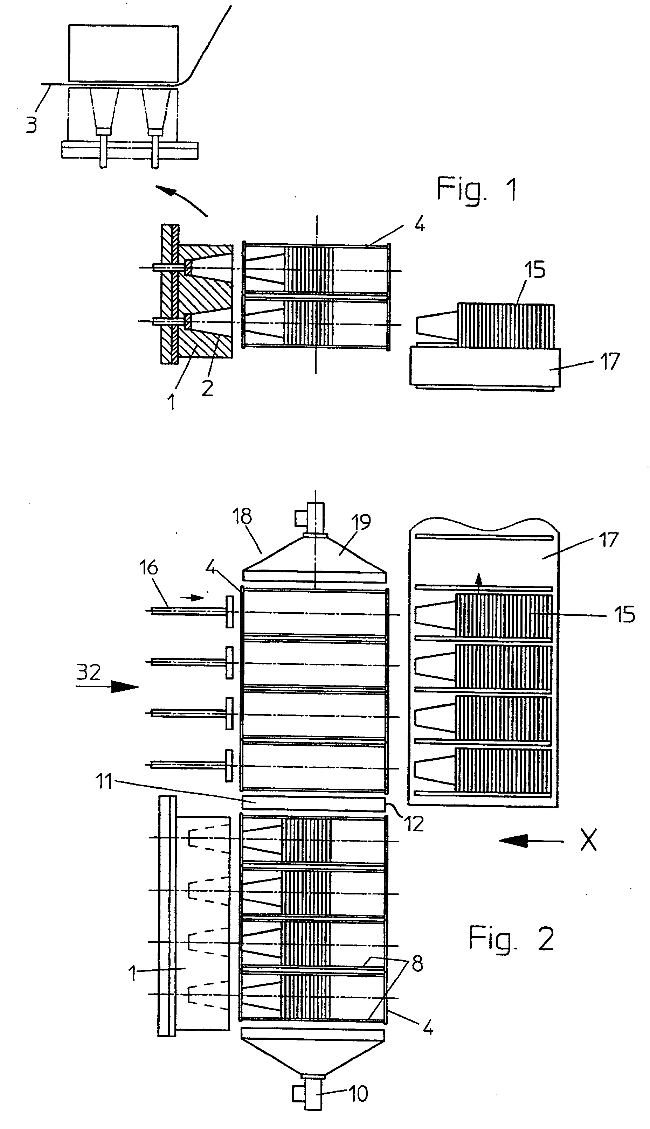

Bei einer Vorrichtung gemäß einer ersten Ausführungsform, die in den Figuren 1 bis 3 dargestellt ist, ist ein Stapelmagazin 4 so nahe an der Öffnung des geschwenkten Formwerkzeuges 1 angeordnet, dass die Behälter 2 direkt in dieses eingestapelt werden können. Nicht dargestellte Rückhalteorgane halten die Behälter 2 in bekannter Weise zurück.

Bei einer Vorrichtung gemäß einer zweiten Ausführungsform, die in Figur 4 dargestellt ist, ist ein Stapelmagazin 4 auf Abstand zur Öffnung des geschwenkten Formwerkzeuges 1 angeordnet, und die Behälter 2 werden von einer Übergabeeinrichtung 5, bestehend aus einer Saugplatte 6 und ggf. Aufnahmen 7, in dieses eingestapelt. Gegebenenfalls erfolgt eine Drehung der Behälter um 180° durch eine entsprechende Drehung der Übergabeeinrichtung 5. Auch ein Führen der Übergabeeinrichtung 5 zu einem seitlich angeordneten Stapelmagazin ist möglich.

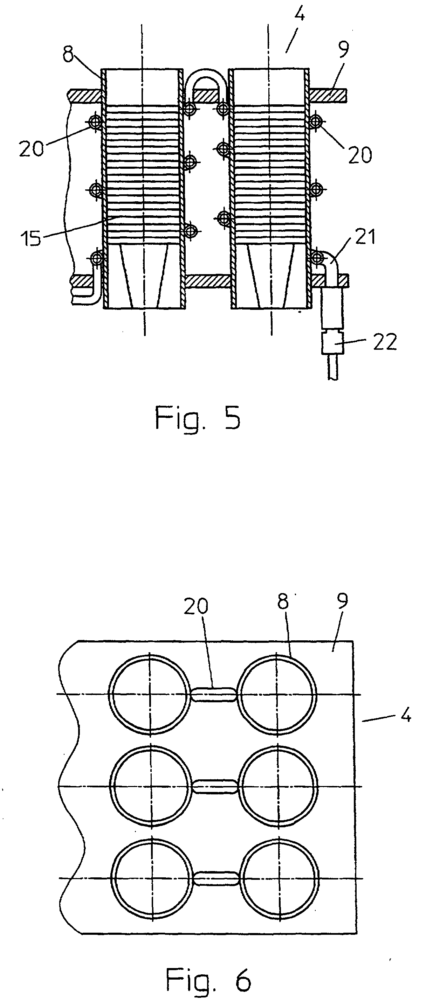

Jedes Stapelmagazin 4 besteht aus einer der Anzahl der Formnester des Formwerkzeuges 1 entsprechenden Anzahl von Stapelkäfigen 8, die eine geschlossene Form aufweisen. Sie sind vorzugsweise aus Metall und im Querschnitt der Stanzkontur der Behälter 2 angepasst. Am einfachsten lassen sich diese aus Blech anfertigen. Alle Stapelkäfige 8 sind an beiden Enden in Halteblechen 9 befestigt (siehe Figur 5), so dass ein kompaktes Stapelmagazin 4 auf einfache Weise gebildet wird, das die gestapelten Behälter 2 ringsum umgibt und dadurch eine Verkeimung weitgehend verhindert.

Die Behälter 2 werden noch relativ warm in die Stapelkäfige 8 übergeben und in diesen Stapelkäfigen 8 gekühlt. In den Figuren 1 bis 3 ist eine Kühlung der Wandung der Stapelkäfige 8 in der Weise dargestellt, dass auf einer Seite eines Stapelmagazins 4 ein Gebläse 10 angeordnet ist, das Luft über die Oberfläche der einzelnen Stapelkäfige 8 bläst. Es hat sich als vorteilhaft erwiesen, diese dann erwärmte Luft auf der anderen Seite des Stapelmagazins 4 abzusaugen über eine Saugkammer 11 mit entsprechenden Öffnungen und einem Sauganschluss 12, so dass eine gute Luftströmung gegeben ist und keine zu großen Luftverwirblungen im Bereich der Stapelmagazine 4 und vor dem abgekippten Formwerkzeug 1 erfolgen, die eine Verkeimung von Behältern 2 begünstigen würden.

Wenn man, wie aus den Figuren 2 und 3 ersichtlich, mit zwei Stapelmagazinen 4 arbeitet, die abwechselnd vor das Formwerkzeug 1 geführt werden, bietet sich ein Wechseln der Stapelmagazine 4 wie durch die Pfeile 13, 14 in Figur 3 dargestellt an. In der Ausschiebestation 18 werden die Behälter 2 als Stapel 15 mittels einer Ausschiebeeinrichtung 16 aus den Stapelkäfigen 8 heraus reihenweise auf ein Querförderband 17 ausgeschoben und weitertransportiert. Es bietet sich an, in dieser Ausschiebestation 18 ein zweites Gebläse 19 anzuordnen, das ebenfalls Luft über die Stapelkäfige 8 bläst, die dann ebenfalls von der Saugkammer 11 aufgenommen werden kann.

Anstelle von Gebläsen 10, 19 kann auch eine Druckluftzuführung aus einem Druckluftnetz zu geeigneten Blasdüsen vorgesehen sein. Diese Druckluft kann zuvor gekühlt worden sein, um die Kühleffizienz zu steigern.

In den Figuren 5 und 6 ist eine andere Art der Kühlung der Stapelkäfige 8 dargestellt, bestehend aus Kühlrohren 20, die auf der Außenseite der Stapelkäfige 8 angebracht sind, beispielsweise in Form von Spiralen. Die einzelnen Kühlrohre 20 sind miteinander verbunden und sind mit einem gemeinsamen Zulauf 21 und auf der anderen Seite mit einem Ablauf versehen. Als Kühlmedium in den Kühlrohren 20 kann gekühltes Wasser eingesetzt werden, Zulauf und Ablauf des Wassers erfolgen über Schläuche, um einen Wechsel der beiden Stapelmagazine 4 vornehmen zu können.

Als Kühlmedium kommt auch Kaltluft in Betracht, die über einen Kältetrockner erzeugt werden kann. Diese Möglichkeit ist dann von Vorteil, wenn die Stapelmagazine 4 nicht nur mit einem zweiten Stapelmagazin 4 gewechselt werden, sondern zu einer Nachfolgeeinrichtung über eine große Strecke transportiert werden, um die Stapel dorthin weitgehend verkeimungsarm zu überführen. In diesem Fall ist eine Trennung der Kühlmedium-Zufuhr erforderlich, die bei einer Kühlluftzufuhr wegen der Leckage einfacher durchzuführen ist als bei Kühlwasser. In diesem Fall sind die Stapelmagazine 4 mit einer automatischen Kupplungseinrichtung 22 für die Kühlmedium-Zufuhr versehen, die vor einem Abtransport der Stapelmagazine 4 automatisch getrennt wird.

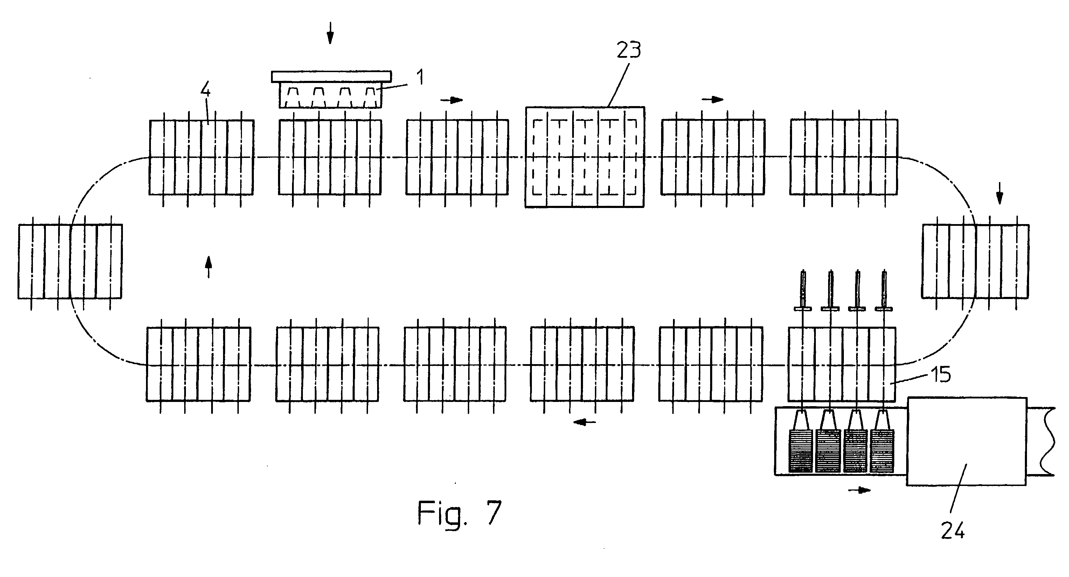

Bei einem solchen Weitertransport der Stapelmagazine 4 über eine größere Wegstrecke zu einer Nachbearbeitungsstation 24 - dargestellt in Figur 7 in der Draufsicht - bietet sich eine weitere Möglichkeit der Kühlung der Stapelkäfige 8 an. Auf der Wegstrecke wird eine Kühlkammer 23 mit Ein- und Auslauf vorgesehen und während des Stapelns von Behältern 2 in ein Stapelmagazin 4 werden ein komplettes Stapelmagazin 4 und damit die darin befindlichen Behälter 2 gekühlt. Von der Größe her kann sich diese Kühlkammer 23 auch über mehrere Stapelmagazine 4 erstrecken. In der Kühlkammer 23 wird entweder Umgebungsluft oder gekühlte Luft auf die Stapelkäfige 8 geblasen. Die Kühlung der Kühlkammer 23 kann auch über einen Wärmetauscher und ein umlaufendes Kühlmedium erfolgen vergleichbar der Kühlung eines Kühlschrankes.

## Patentansprüche

1. Verfahren zum Kühlen von Behältern (2) aus thermoplastischem Kunststoff, die in einem Formwerkzeug (1) geformt, ausgestanzt und zu Stapelmagazinen (4) mit Stapelkäfigen (8) geführt werden, **dadurch gekennzeichnet, dass** die Behälter (2) in im Umfang ringsum geschlossene Stapelkäfige (8) übergeben werden, die auf der Außenfläche gekühlt werden.

2. Verfahren nach Anspruch 1, **dadurch gekennzeichnet, dass** die Stapelkäfige (8) durch auf die Oberfläche mittels Gebläsen oder über Blasluftdüsen geblasene, ggf. zuvor gekühlte Luft gekühlt werden.

3. Verfahren nach Anspruch 1 oder 2, bei dem die Stapelmagazine (4) über eine Wegstrecke zu einer Nachbearbeitungsstation (24) geführt werden, **dadurch gekennzeichnet, dass** die Kühlung der Stapelkäfige (8) in einer geschlossenen Kühlkammer (23) erfolgt.

4. Verfahren nach Anspruch 1 **dadurch gekennzeichnet, dass** die Stapelkäfige (8) durch ein Kühlmedium gekühlt werden, das durch an der Oberfläche der Stapelkäfige (8) angebrachte Kühlrohre (20) geleitet wird.

5. Verfahren nach einem der Ansprüche 1 bis 4, **dadurch gekennzeichnet, dass** die Behälter (2) direkt aus dem Formwerkzeug (1) in die gekühlten Stapelkäfige (8) übergeben werden.

6. Verfahren nach einem der Ansprüche 1 bis 9, **dadurch gekennzeichnet, dass** die Behälter (2) mittels einer Übergabeeinrichtung (5) in die gekühlten Stapelkäfige (8) übergeben werden.

7. Stapeleinrichtung zur Aufnahme von Behältern (2), die aus einer thermoplastischen Kunststofffolie geformt und ausgestanzt werden, bestehend aus Stapelmagazinen (4) mit Stapelkäfigen (8), die im Querschnitt der Stanzkontur der Behälter (2) angepasst sind, **gekennzeichnet durch** eine auf die Außenseite der im Umfang ringsum geschlossenen Stapelkäfige (8) einwirkende Kühleinrichtung (10,19,20).

8. Stapeleinrichtung nach Anspruch 7 **dadurch gekennzeichnet, dass** die Kühleinrichtung aus Gebläsen (10,19) oder Blasdüsen besteht, über die Luft auf die Außenfläche der Stapelkäfige (8) Luft geblasen wird.

9. Stapeleinrichtung nach Anspruch 8, **gekennzeichnet durch** eine Saugkammer (11) zur Abfuhr der über die Stapelkäfige (8) geleiteten Luft.

10. Stapeleinrichtung nach einem der Ansprüche 7 oder 8, **gekennzeichnet durch** eine geschlossene Kühlkammer (23) zur Aufnahme mindestens eines Stapelmagazins (4).

11. Stapeleinrichtung nach Anspruch 7, **dadurch gekennzeichnet, dass** die Kühleinrichtung aus Kühlrohren (20) zur Durchleitung eines Kühlmediums besteht, die auf der Oberfläche der Stapelkäfige (8) angebracht sind.

12. Stapeleinrichtung nach Anspruch 11, **dadurch gekennzeichnet, dass** die Kühlrohre (20) mit einer automatischen Kupplungseinrichtung (22) in Verbindung stehen.

## Claims

1. Method of cooling containers (2) of thermoplastic synthetic material, which are moulded in a mould tool (1), punched out and led to stack magazines (4) with stack cages (8), **characterised in that** the containers (2) are transferred to stack cages (8) which are closed all round at the circumference and which are cooled at the outer surface.

2. Method according to claim 1, **characterised in that** the stack cages (8) are cooled at the surface by air which is blown by means of fans or by way of air jet nozzles and which is optionally cooled beforehand.

3. Method according to claim 1 or 2, in which the stack magazines (4) are led by way of a travel path to a further processing station (24), **characterised in that** the cooling of the stack cages (8) is carried out in a closed cooling chamber (23).

4. Method according to claim 1, **characterised in that** the stacking cages (8) are cooled by a coolant which is conducted through cooling pipes (20) mounted at the surface of the stack cages (8).

5. Method according to one of claims 1 to 4, **characterised in that** the containers (2) are transferred directly from the mould tool (1) to the cooled stack cages (8).

6. Method according to one of claims 1 to 9, **characterised in that** the containers are transferred to the cooled stack cages (8) by means of a transfer device (5).

7. Stacking device for receiving containers (2) which are formed from a thermoplastic synthetic material film and which are punched out, consisting of stack magazines (4) with stack cages (8) matched in cross-section to the punched profile of the containers (2), **characterised by** a cooling device (10, 19, 20) acting on the outer side of the stack cages (8), which are closed all round at the circumference.

8. Stacking device according to claim 7, **characterised in that** the cooling device consists of fans (10,19) or jet nozzles, by way of which air is blown onto the outer surface of the stack cages (8).

9. Stacking device according to claim 8, **characterised by** a suction chamber (11) for discharge of air conducted across the stack cages (8).

10. Stacking device according to one of claims 7 and 8, **characterised by** a closed cooling chamber (23) for receiving at least one stack magazine (4).

11. Stacking device according to claim 7, **characterised in that** the cooling device consists of cooling pipes (20) for conducting a coolant, the cooling pipes being mounted on the surface of the stack cages (8).

12. Stacking device according to claim 11, **characterised in that** the cooling pipes (20) are connected with an automatic coupling device (22).

## Revendications

1. Procédé de refroidissement de récipient en matière thermoplastique réalisé dans un outil de formage (1), estampé et transféré à des magasins d'empilage (4) ayant des cages d'empilage (8),
**caractérisé en ce que**
les récipients (2) sont transférés à des cages d'empilage (8) fermées à leur périphérie et dont on refroidit la surface extérieure.

2. Procédé selon la revendication 1,
**caractérisé en ce que**
les cages d'empilage (8) sont refroidies en surface par des ventilateurs ou des buses de soufflage d'air le cas échéant de l'air préalablement refroidi.

3. Procédé selon les revendications 1 ou 2, selon lequel les magasins de piles (4) sont conduits selon un trajet vers un poste de finition (24),
**caractérisé en ce que**
le refroidissement des cages d'empilage (8) se fait dans une chambre de refroidissement (23), fermée.

4. Procédé selon la revendication 1,
**caractérisé en ce que**
les cages d'empilage (8) sont refroidies par un milieu de refroidissement que l'on fait passer à travers des tubes de refroidissement (20) installés à la surface des cages d'empilage (8).

5. Procédé selon l'une des revendications 1 à 4,
**caractérisé en ce que**
les récipients (2) sont transférés directement du moule (1) aux cages d'empilage refroidies (8).

6. Procédé selon l'une des revendications 1 à 5,
**caractérisé en ce que**
les récipients (2) sont transférés aux cages d'empilage refroidies (8) par l'intermédiaire d'une installation de transfert (5).

7. Installation d'empilage pour recevoir des récipients (2) formés à partir d'un fil de matière thermoplastique et estampés, cette installation se composant de magasins d'empilage (4) avec des cages d'empilage (8) dont la section est adaptée au contour d'estampage des récipients (2),
**caractérisée par**
une installation de refroidissement (10, 19, 20) qui agit sur le côté extérieur des cages d'cmpilage (8) fermées à leur périphérie.

8. Installation d'empilage selon la revendication 7,
**caractérisée en ce que**
l'installation de refroidissement est formée de ventilateurs (10, 19) ou de buses de soufflage qui soufflent de l'air sur la surface extérieure des cages d'empilage (8).

9. Installation d'empilage selon la revendication 8,
**caractérisée par**
une chambre d'aspiration (11) pour évacuer l'air envoyé sur la cage d'empilage (8).

10. Installation d'empilage selon l'une des revendications 7 ou 8,
**caractérisé par**
une chambre de refroidissement (23) fermée pour recevoir au moins un magasin d'empilage (4).

11. Installation d'empilage selon la revendication 7,
**caractérisée en ce que**
l'installation de refroidissement est formée de tubes de refroidissement (20) pour le passage d'un milieu de refroidissement installé à la surface de la cage d'empilage (8).

12. Installation d'empilage selon la revendication 11,
**caractérisée en ce que**
les tubes de refroidissement (20) sont reliés à des installations de couplage automatique (22).
